# EUROPEAN PATENT APPLICATION

(11) **EP 1 953 699 A1**
(43) Date of publication of application: **06.08.2008**
(21) Application number: 07002206.6
(22) Date of filing: 01.02.2007
(51) Int. Cl.: G06T 5/30, G08B 13/196

(54) **System and method for variable-resolution image saving**

(71) Applicant: Sunvision Scientific Inc., Industrial Park Taichung City 407 (TW)
(72) Inventor: Chang, Chow-Ing, 407 Taichung City (TW); Chang, Chao-Hung, 407 Taichung City (TW); Chang, Tain-Tzu, 407 Taichung City (TW)
(74) Representative: Liesegang, Eva

(57) **Abstract**

A system and method for variable-resolution image saving includes an image capturing member, a data saving member, and an image data processor. A first panoramic image data is captured by the image capturing member in high resolution. The image data is then analyzed and divided into target area and background area. The resolution of background area is lowered to reduce the size of image data. A second panoramic image is then formed with the target area in original high resolution and background area in lower resolution. In this way, memory size and time required for storing and transmitting the second panoramic image data are greatly reduced without loosing important features of the target area.

## Description

### FIELD OF THE INVENTION

The present invention relates to an image saving system, and more particularly to an image saving system that uses a high-resolution image capturing member to acquire a first panoramic image data, and various image processing techniques to divide the first panoramic image data into background image data and target of interest image data, and reduce the resolution of the background image data. The background image data with low resolution and the target image data with the original high resolution are then synthesized to form a second panoramic image data that can be stored and transmitted with reduced memory size and time without losing important features of the targets of interest.

### BACKGROUND OF THE INVENTION

Security cameras for a surveillance system are commonly installed at building entrances, parking lots, convenience stores, banks, or even private homes. The security camera normally has a wide-angle lens to monitor and record people, vehicles, etc. passing through the designated area. Video tapes or digital storage devices having images captured by the security cameras recorded thereon may be reviewed to help in investigation and identify suspects if criminal act should happen.

Conventional surveillance system uses either video tapes or digital storage devices to store recorded image. However, the security cameras for the conventional surveillance system usually have a CCD (charge-coupled device) or a CMOS (complementary metal-oxide semiconductor) about only 300,000 pixels and therefore the resolution is low. On the other hand, there are latest types of high-resolution video cameras with several million or even tens of million pixels being used in the most advanced surveillance system. These high- resolution security cameras produce image data that are very big in size and result in insufficient storage capacity and short recording time, and transmitting the image data to a remote site can be a problem due to limitation of bandwidth. Therefore, most of the current surveillance systems adopt low- resolution video cameras.

Moreover, since the security cameras used in the conventional surveillance system usually use a wide-angle lens to take fixed wide-angle images in the coverage area, it is very difficult to identify details of most moving targets in the recording due to insufficient resolution captured by the low-resolution camera, particularly when the object is at a distance away from the video camera. The result is that the conventional surveillance system just could not achieve the goal of preserving evidence.

While there is image processing software available for enhancing images, such image enhancing technique has limited function. Moreover, due to the low-resolution image captured by the conventional surveillance system, it is almost useless to enlarge images of target of interest for clear identification.

Therefore, it is an important issue to develop a system and method for the surveillance system to capture and display clear image data of targets of interest to achieve effective surveillance and recording without increasing the storage capacity and time required to store and transmit the captured image data.

It is therefore tried by the inventor to develop a system and method for variable-resolution image saving to overcome the present problems in the prior art, so that a first high-resolution panoramic image data initially captured may be processed to form a second panoramic image data having background image data with low resolution and the image data of targets of interest with high resolution to thereby reduce memory size and time required for storing and transmitting the image data.

### SUMMARY OF THE INVENTION

A primary objective of the present invention is to provide a system and method for variable-resolution image saving, so that a high-resolution panoramic image data may be acquired and processed to form a synthesized panoramic image data having background image data with low resolution and image data of target of interest with high resolution to thereby reduce memory size and time required for storing and transmitting the image data.

Another objective of the present invention is to provide a system and method for variable-resolution image saving, so that image of a target of interest in a panoramic image captured using this invention may retain all features after been magnified.

To achieve the above and other objectives, the system and method for variable-resolution image saving according to the present invention includes an image capturing member for acquiring a first panoramic image data with a first resolution from a predetermined area; a data saving member including at least a first data saving unit for receiving and temporarily storing the first panoramic image data, and a second data saving unit for storing a second panoramic image data on a long-term basis, and the second panoramic image data is the result of the first panoramic image data after specific image processing; and an image data processor including at least a target identifying member connected to the first data saving unit for receiving the first panoramic image data, and for identifying image data of at least one target of interest in the first panoramic image data and dividing the first panoramic image data into target image data and background image data; a image data converting member receiving the background image data from the target identifying member, and converting the background image data into a second resolution, which is lower than the first resolution; and an image synthesizer receiving the background image data with the second resolution from the data converting member and the target image data with the first resolution, and forming a second panoramic image data with the background image data with the second resolution and the target image data with the first resolution; and the synthesized second panoramic image data then be transferred to and stored in the second data saving unit of the data saving member. In this manner, clear image features of targets of interest can be retained, and memory size and time required for storing and transmitting the image data can be greatly reduced.

### BRIEF DESCRIPTION OF THE DRAWINGS

The structure and the technical means adopted by the present invention to achieve the above and other objectives can be best understood by referring to the following detailed description of the preferred embodiments and the accompanying drawings, wherein
Fig. 1 is a block diagram showing the flowchart based on a system and method of the present invention for variable-resolution image saving;
Fig. 2 shows a first panoramic image data with a first resolution acquired using the system and method of the present invention;
Fig. 3 shows a background image data separated from the first panoramic image data of Fig. 2;
Fig. 4 shows a target image data separated from the first panoramic image data of Fig. 2; and
Fig. 5 shows a second panoramic image data synthesized from the background image data with a second resolution and the target image data with the first resolution.

### DETAILED DESCRIPTION OF THE PREFERRED EMBODIMENTS

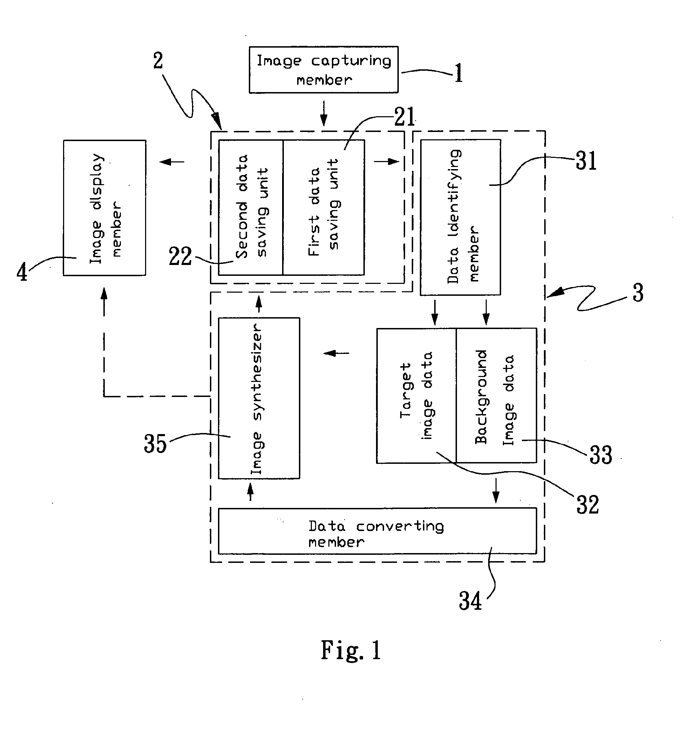

Please refer to Fig. 1 that is a block diagram showing a system processing flowchart based on a system and method of the present invention for variable-resolution image saving. As shown, the system includes an image capturing member 1, a data saving member 2, an image data processor 3, and an image display member 4.

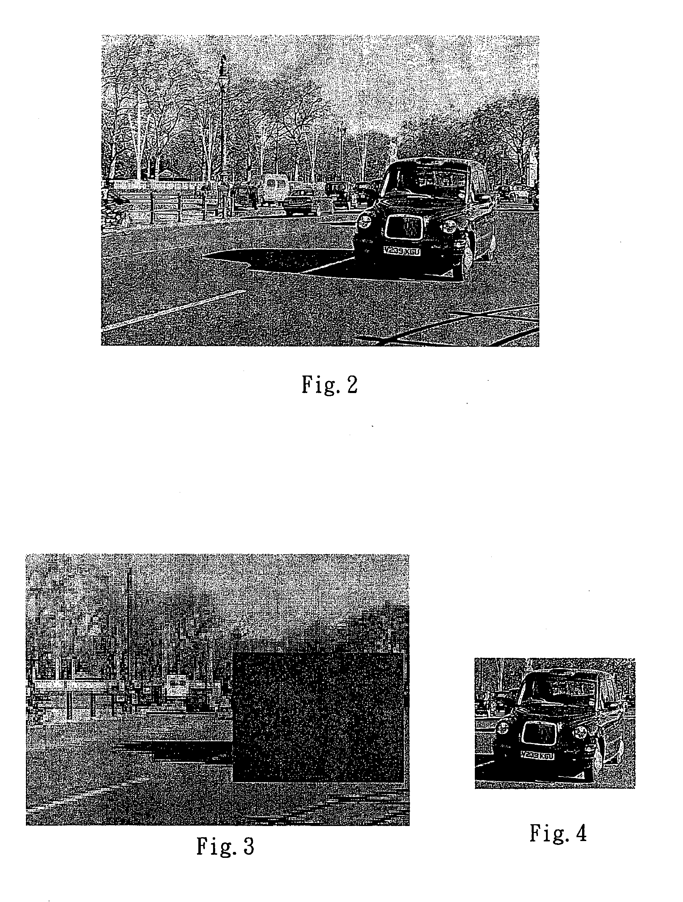

The image capturing member 1 contains at least one camera for acquiring a first panoramic image data with a first resolution from a predetermined area. Fig. 2 shows an example of the first panoramic image data acquired with a first resolution.

The data saving member 2 is a digital memory unit and includes at least a first data saving unit 21 for receiving and temporarily storing the first panoramic image data captured by the image capturing member 1, and a second data saving unit 22 for storing a second panoramic image data on a long-term basis. Wherein, the second panoramic image data is obtained by subjecting the first panoramic image data to specific image processing.

The image data processor 3 is a computer and includes at least a target identifying member 31, a data converting member 34, and an image synthesizer 35.

The target identifying member 31 is connected to the first data saving unit 21 for receiving the first panoramic image data transferred from the first data saving unit 21, and for identifying image data of at least one target of interest in the first panoramic image data and dividing the first panoramic image data into target image data 32 and background image data 33. Fig. 3 shows an example of a background image data 33 separated from the first panoramic image data shown in Fig. 2; and Fig. 4 shows an example of a target image data 32 separated from the first panoramic image data shown in Fig. 2. Wherein, the target of interest is determined according to at least one parameter selected from the group consisting of movement, contour, color, size, temperature detected via infrared, and speed. In the first panoramic image data shown in Fig. 2, the target of interest is a car.

The data converting member 34 receives the background image data 33 from the target identifying member 31, and converts the background image data 33 into a second resolution, which is lower than the first resolution.

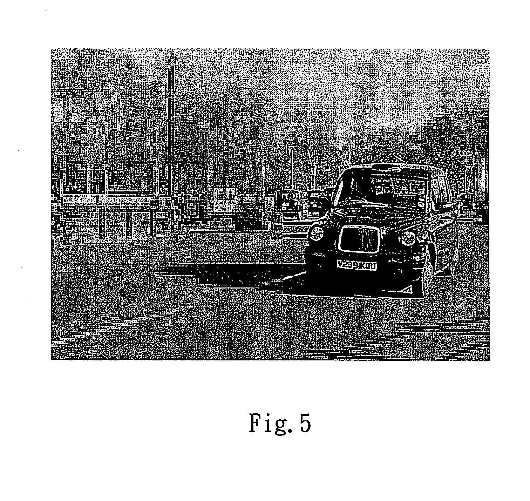

The image synthesizer 35 receives the background image data 33 with the second resolution from the data converting member 34 and the target image data 32 with the first resolution, and forms a second panoramic image data including the background image data 33 with the second resolution and the target image data 32 with the first resolution. Fig. 5 shows an example of the second panoramic image data synthesized from the background image data 33 shown in Fig. 3 but with the second resolution, and the target image data 32 shown in Fig. 4 with the first resolution. The synthesized second panoramic image data is then stored in the second data saving unit 22 of the data saving member 2.

The image display member 4 receives the second panoramic image data from either the second image saving unit 22 or the image synthesizer 35, such that the second panoramic image data can be displayed on the image display member 4.

With the system and method for variable-resolution image saving according to the present invention, a first panoramic image is taken by the video camera 1 within the predetermined area. The first panoramic image data is stored in the first data saving unit 21. The target identifying member 31 uses various image processing techniques to determine that the car is the target of interest and divide the first panoramic image data into the target image data 32 and background image data 33. Then, the data converting member 34 reduce the resolution of the background image data 33, Both the target image data 32 in original high resolution and the converted background image data in lowed resolution are send to the image synthesizer 35 to form a second panoramic image data, as shown in Fig. 5. The synthesized second panoramic image data is then transferred to and stored in the second data saving unit 22. When replay the image data stored in the second data saving unit 22, the target image data 32 retained its original high resolution with detailed features.

Therefore, the permanently saved second panoramic image data includes target image data with high resolution but background image data with reduced resolution to greatly reduce the memory size and time required for storing and transmitting the image data. These advantages make the present invention novel, improved, and practical for use when being compared with prior art.

## Claims

1. An variable-resolution image saving system comprising:
an image capturing means for acquiring a first panoramic image data with a first resolution from a predetermined area;
a data saving means comprising a first (short term or temporary) data saving member for receiving the first panoramic image data captured by the image capturing device such that the first panoramic image data can be stored in the first data saving member; a second (long term or permanent) data saving member for receiving the second panoramic image data after processing, such that the second panoramic image data can be stored in the second data saving member.
a data processing means comprising :
a target identifying member which is connected to the first data saving member for receiving the first panoramic image data transferred from the first data saving member and for identifying image data of at least one target of interest from the first panoramic image data and dividing the first panoramic image data into target image data and background image data;
a data converting member receiving the background image data from the target identifying member and converting the background image data from the first resolution into a second resolution, wherein the second resolution is lower than the first resolution; and
an image synthesizer receiving the background image data with the second resolution and the target image data with the first resolution, and forming a second panoramic image data with the background image data with the second resolution and the target image data with the first resolution, and transferring the second panoramic image data to the second data saving member of the data saving means for storing.

2. The variable-resolution image saving system as claimed in claim 1, further comprising an image display member which is connected to said image synthesizer and/or said second data saving member such that the second panoramic image data can be displayed on the image display member.

3. The variable-resolution image saving system as claimed in claim 1 or 2, wherein the image capturing member is a video camera.

4. The variable-resolution image saving system as claimed in one of the preceding claims,
wherein the data processing means is a computer.

5. The variable-resolution image saving system as claimed in one of the preceding claims, wherein the data saving means is a digital memory unit.

6. The variable-resolution image saving system as claimed in one of the preceding claims, wherein the targets of interest are determined by at least one factor selected from the group consisted of movement, contour, color, dimensions, temperature detected by infra-red rays, and speed.

7. An variable-resolution image saving method, comprising the steps of:
acquiring a first panoramic image data with a first resolution from a predetermined area by an image capturing means;
saving the first panoramic image data in a first data saving member;
transferring the first panoramic image data from the first data saving member to a target identifying member;
identifying image data of at least one target of interest from the first panoramic image data and dividing the first panoramic image data into target image data and background image data by the target identifying member;
receiving the background image data from the target identifying member and converting the background image data from the first resolution into a second resolution by a data converting member, wherein the second resolution is lower than the first resolution; and
receiving the background image data with the second resolution and the target image data with the first resolution and forming a second panoramic image data with the background image data with the second resolution and the target image data with the first resolution by an image synthesizer.

8. The variable-resolution image saving method as claimed in claim 7, wherein the targets of interest are determined by at least one factor selected from the group consisted of movement, contour, color, dimensions, temperature detected by infra-red rays, and speed.

9. The variable-resolution image saving method as claimed in claim 7 or 8, further comprising an image display member which is connected to said image synthesizer and/or said second data saving member such that the second panoramic image data can be displayed on the image display member.

10. The variable-resolution image saving method as claimed in one of claims 7 to 9, wherein the image capturing member is a video camera.

11. The variable-resolution image saving method as claimed in one of claims 7 to 10, wherein the data processing means is a computer.

12. The variable-resolution image saving method as claimed in one of claims 7 to 11, wherein the data saving means is a digital memory unit.
